# DEMANDE DE BREVET EUROPEEN

(11) **EP 1 067 004 A1**
(43) Date de publication de la demande: **10.01.2001**
(21) Numéro de dépôt: 00401914.7
(22) Date de dépôt: 04.07.2000
(51) Int. Cl.: B60K 11/02, F01P 11/02

(54) **Dispositif de fixation d'un réservoir de fluide dans un véhicule automobile**

(30) Priorité: 08.07.1999 FR 9908871
(71) Demandeur: VALEO THERMIQUE MOTEUR, 78321 La Verrière (FR)
(72) Inventeur: Guyomard, Jean-Nicolas, 27930 Le Mesnil Fuguet (FR)
(74) Mandataire: Bezault, Jean

(57) **Abrégé**

L'invention concerne une fixation d'un réservoir de fluide, notamment d'un équipement de véhicule automobile, sur une partie du véhicule prévue à cet effet. Selon l'invention, ce réservoir (RES) est fixé sur le module de face avant du véhicule. Il est prévu alors un logement homologue (1) du réservoir (RES) dans le module (MFA), dans lequel le réservoir est introduit, puis fixé préférentiellement par encliquetage.

## Description

L'invention concerne la fixation d'un réservoir de fluide sur une partie d'un véhicule automobile.

Un tel réservoir, notamment d'un équipement du véhicule, peut contenir, par exemple, un liquide de refroidissement du moteur du véhicule, ou encore un liquide de lavage du pare-brise.

Généralement, des réservoirs de ce type sont fixés sur la carrosserie du véhicule, en faisant saillie. Il en résulte un encombrement qu'il est souhaité de réduire dans les véhicules actuels.

Par ailleurs, le véhicule comporte habituellement un module de face avant destiné à supporter une pluralité d'équipements du véhicule, tels que des projecteurs, des échangeurs de chaleur, etc. Certains équipements de ce type, tels qu'un radiateur de refroidissement du moteur du véhicule, nécessi tant un réservoir de fluide, sont fixés sur le module de face avant, tandis que leur réservoir est fixé ensuite sur la carrosserie, ce qui alourdit le montage d'un tel équipement.

La présente invention vient améliorer la situation.

Elle propose à cet effet un procédé de fixation d'un réservoir de fluide, notamment d'un équipement de véhicule automobile, sur un module de face avant du véhicule.

Selon une définition générale de l'invention, le procédé comporte les étapes suivantes :
a) prévoir un réservoir de fluide de forme choisie, ainsi qu'un module de face avant comprenant un logement homologue dudit réservoir de fluide,
b) introduire le réservoir dans le logement, et
c) fixer le réservoir dans son logement.

Ici, le terme "logement" est à prendre au sens large. Il peut s'agir d'une ouverture formée dans le module de face avant et destinée à recevoir tout ou partie du réservoir. Il peut s'agir aussi d'un évidement formé dans une surface du module et destiné à recevoir tout ou partie du réservoir. Cet évidement peut aussi être formé dans un bord du module de face avant, tandis que ses parois sont en regard d'une partie seulement des parois du réservoir.

Selon une caractéristique optionnelle avantageuse de l'invention, il est prévu des moyens pour un coulissement en translation du réservoir dans le logement, au cours de l'étape b).

Préférentiellement, les moyens de coulissement comprennent une nervure et une rainure propres à coopérer l'une avec l'autre.

Avantageusement, le logement comporte une paroi de fond sensiblement perpendiculaire à une direction d'introduction du réservoir dans le logement, tandis que le réservoir comporte une protubérance en regard de ladite paroi de fond, de sorte qu'au cours de l'étape b), la protubérance vient au contact de la paroi de fond, laquelle forme alors butée.

Selon une autre caractéristique optionnelle avantageuse de l'invention, il est prévu des moyens de fixation par encliquetage du réservoir dans le logement au cours de l'étape c).

Dans une variante, le réservoir est fixé par surmoulage dans le logement du module de face avant, au cours de l'étape c).

Dans une autre variante, il peut être fixé par vissage.

Ainsi, le module de face avant comporte, pour la mise en oeuvre du procédé selon l'invention, des moyens de réception d'un réservoir de fluide. A ce titre, la présente invention vise aussi un tel module de face avant.

De son côté, le réservoir de fluide comporte, pour la mise en oeuvre du procédé selon l'invention, des moyens de coopération pour son introduction et sa fixation dans un logement d'un module de face avant du véhicule. A ce titre, la présente invention vise aussi un tel réservoir de fluide.

D'autres caractéristiques et avantages de l'invention apparaîtront à l'examen de la description détaillée ci-après, et des dessins annexés sur lesquels :
- la figure 1 représente une vue d'ensemble d'un module de face avant MFA, muni, selon l'invention, d'un logement 1 pour recevoir un réservoir de fluide d'un équipement de véhicule automobile ;
- la figure 2 représente une vue de détail du logement 1 et d'un réservoir de fluide RES, pendant l'étape d'introduction b) du réservoir dans son logement ;
- la figure 3 représente une vue de détail d'une nervure formée sur une paroi du logement 1 ;
- la figure 4 représente la coopération de la nervure représentée sur la figure 3, avec une rainure formée dans le réservoir RES ; et
- la figure 5 représente une vue de détail d'une partie des moyens de fixation, par encliquetage, du réservoir dans son logement.

Les dessins contiennent, pour l'essentiel, des éléments de caractère certain. Ils pourront donc non seulement servir à mieux faire comprendre la description, mais aussi contribuer à la définition de l'invention, le cas échéant.

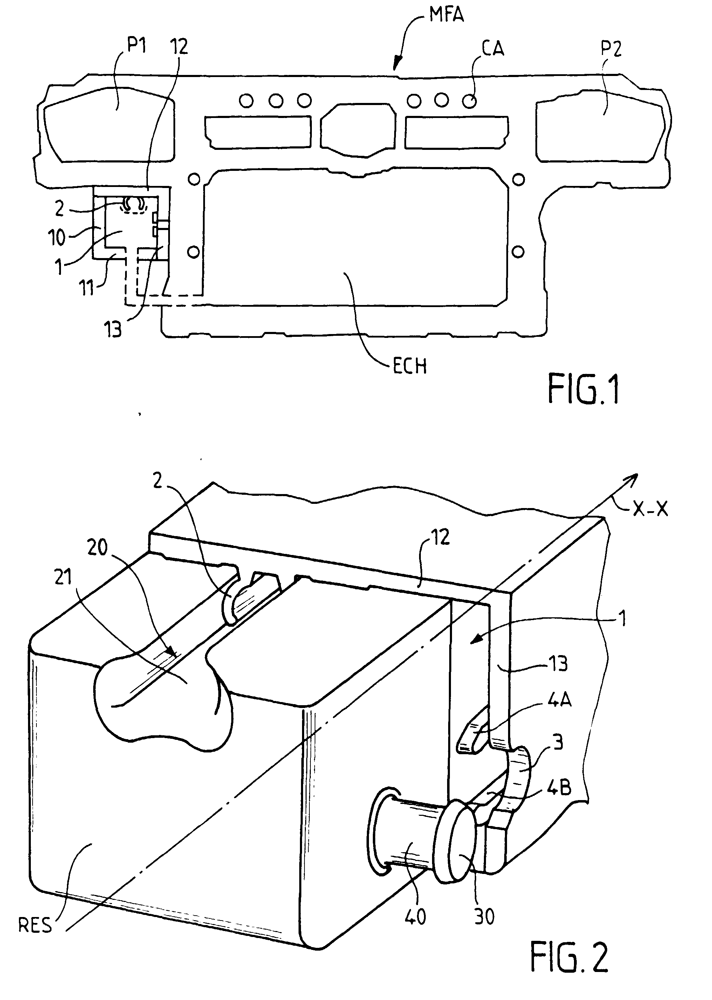

On se réfère tout d'abord à la figure 1 pour décrire un module de face avant MFA d'un véhicule automobile. Un tel module est destiné à supporter une pluralité d'équipements du véhicule automobile, tels que des projecteurs (dans les logements P1 et P2), au moins un échangeur de chaleur de type radiateur de refroidissement du moteur du véhicule (dans le logement ECH), etc. Le module comporte d'autres ouvertures, notamment pour le passage de câbles électriques ou de câbles de commande mécanique (dans les ouvertures CA).

Dans l'exemple décrit, le réservoir de fluide (non représenté sur la figure 1) contient un liquide de refroidissement du moteur du véhicule. Il est relié au radiateur de refroidissement du moteur par l'intermédiaire d'un conduit (représenté en trait pointillé). Dans l'exemple représenté sur la figure 1, il est logé dans une ouverture 1 formée dans le module de face avant MFA, et délimitée par quatre parois 10, 11, 12, 13, formant sensiblement un parallélipède creux, dans lequel est glissé le réservoir.

En se référant en particulier à la figure 2, la paroi supérieure 12 du logement 1 formé comprend avantageusement une nervure 2 qui présente une forme en C dans une coupe transversale. Cette nervure 2 coopère avec une rainure 20, formée dans le réservoir RES. Ainsi, le réservoir RES peut coulisser dans le logement 1, grâce à la liaison nervure/rainure, de type "queue d'aronde".

Il est à noter que la coopération des formes respectives en C de la rainure 20 et de la nervure 2, rajoutée sur la paroi supérieure 12 du logement 1, permet avantageusement de supporter le réservoir RES et de supprimer la paroi inférieure 11 du logement 1, ainsi que sa paroi latérale 10, le cas échéant.

La paroi latérale 13 du logement 1 comporte un évidement 3 en forme de U, destiné à recevoir un pion 30 que comporte une face latérale du réservoir RES, en regard de la paroi latérale 13 du logement 1. La surface interne de la paroi 13 comporte, par ailleurs, deux pattes élastiques 4A et 4B (figure 5) qui reçoivent, quant à elles, une gorge annulaire 40 formée sur le pion 30. Ainsi, le pion 30 et les pattes élastiques forment des moyens d'encliquetage du réservoir RES dans le logement 1.

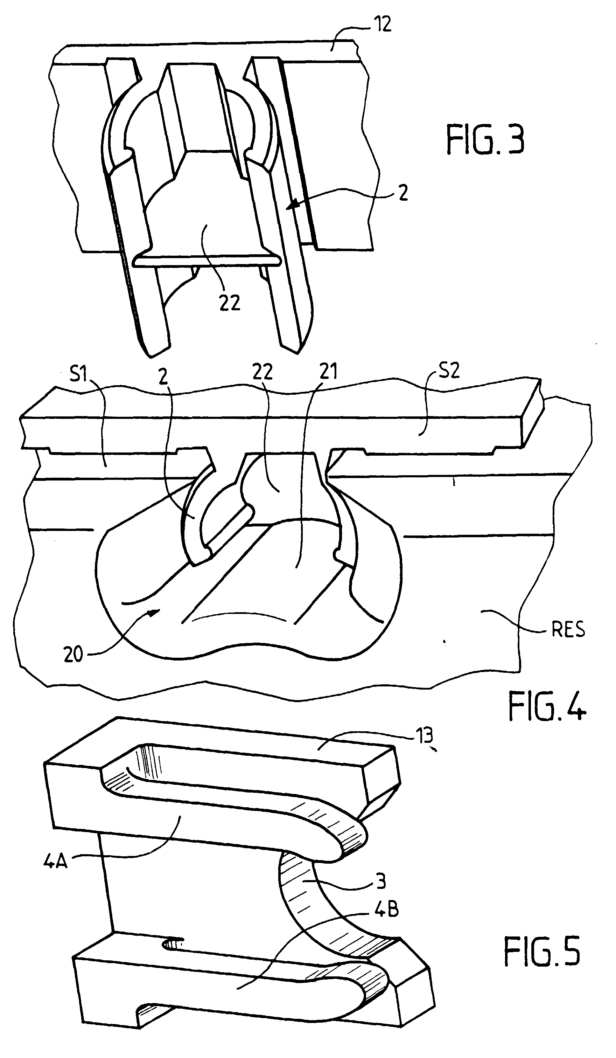

En se référant maintenant à la figure 3, la nervure 2 du logement comporte une paroi 22, sensiblement perpendiculaire à l'axe général de la nervure 2, tandis que la rainure 20 formée dans le réservoir RES présente un bossage 21 (figure 4) le long d'une partie au moins de la rainure 20. Ainsi, la paroi de fond 22 forme une butée sur le bossage 21, dans le mouvement en translation d'introduction du réservoir RES dans le logement 1.

En se référant à la figure 4, il est prévu en outre des surfaces d'appui S1 et S2, respectivement sur le réservoir et sur la paroi 12 du logement, ce qui facilite avantageusement le mouvement d'encliquetage du pion 30 sur les pattes 4A et 4B.

Le réservoir RES est fixé dans son logement 1 comme suit :
- la nervure 2 du logement 1 est introduite dans la rainure 20 formée sur la face supérieure du réservoir RES ;
- le réservoir RES coulisse en translation dans le logement 1, selon l'axe X-X représenté sur la figure 2 ;
- le bossage 21 vient en butée contre la paroi de fond 22 prévue sur la nervure 2 ; et
- les pattes élastiques 4A et 4B que porte la face interne de la paroi 13 du logement 1 viennent s'encliqueter sur la gorge annulaire 40 que comporte le pion 30 monté sur le réservoir RES, tandis que le pion 30 vient en butée contre l'évidement 3 en U formé dans la paroi 13.

Il est à noter que la position de la paroi de fond 22, relativement à la profondeur de l'évidement 3, est choisie de sorte que le bossage 21 vient en butée contre la paroi 22 et le pion 30 vient contre l'évidement 3, selon des cinématiques similaires.

Selon l'un des avantages majeurs que procure la présente invention, le radiateur de refroidissement, monté dans son logement ECH, est déjà équipé de son réservoir de liquide de refroidissement RES, fixé dans le logement 1 du module de face avant MFA. Il peut être prévu ainsi une pluralité de logements de réservoirs de fluides pour des équipements nécessitant un réservoir, et montés sur le module de face avant. Le module de face avant, ainsi pré-équipé, peut être fixé ensuite sur la carrosserie du véhicule.

Bien entendu, la présente invention ne se limite pas à la forme de réalisation décrite ci-avant à titre d'exemple ; elle s'étend à d'autres variantes.

Ainsi, on comprendra que le réservoir de fluide RES peut contenir un fluide différent d'un liquide de refroidissement du moteur du véhicule, tel qu'un liquide pour le lavage d'une vitre du véhicule, telle que le pare-brise. Le réservoir RES peut contenir en outre un fluide sous forme gazeuse, ou encore en deux phases (liquide et gaz), notamment en tant que réservoir de fluide frigorigène d'une boucle de climatisation du véhicule automobile.

Le logement à quatre parois est représenté sur la figure 1 à titre d'exemple. En variante, ce logement peut ne comprendre que deux ou trois parois et les parois 10 et/ou 11 sont supprimées. Il est à noter que dans la variante à trois parois, il peut être prévu des liaisons de type nervure/rainure pour faire coulisser le réservoir RES à la manière d'un tiroir dans le logement 1.

Les moyens de fixation par encliquetage sont décrits ci-avant à titre d'exemple. En variante, il peut être prévu de visser le réservoir RES, après son introduction dans le logement 1.

Il peut être prévu en outre de fixer le réservoir RES dans son logement par surmoulage, en rajoutant par exemple de la matière plastique au moins sur les jonctions entre les parois 12 et 13 et le réservoir RES.

La paroi de fond 22 formant butée est décrite ci-avant à titre d'exemple. Dans une variante, cette paroi de fond peut être aménagée sur la paroi 12 et/ou la paroi 13, dans le fond du logement 1.

Par ailleurs, la coopération d'une nervure avec une rainure est décrite ci-avant à titre d'exemple. En variante, il peut être prévu un logement à quatre parois, le réservoir RES coulissant entre ces quatre parois jusqu'au fond du logement 1.

## Revendications

1. Procédé de fixation d'un réservoir de fluide, notamment d'un équipement de véhicule automobile, sur un module de face avant du véhicule,
caractérisé en ce qu'il comporte les étapes suivantes :
a) prévoir un réservoir de fluide (RES) de forme choisie, ainsi qu'un module de face avant (MFA) comprenant un logement (1) homologue dudit réservoir de fluide (RES),
b) introduire le réservoir (RES) dans le logement (1), et
c) fixer le réservoir (RES) dans son logement (1).

2. Procédé selon la revendication 1, caractérisé en ce qu'il est prévu des moyens (2,20) pour un coulissement en translation du réservoir dans le logement, au cours de l'étape b).

3. Procédé selon la revendication 2, caractérisé en ce que les moyens de coulissement comprennent une nervure (2) et une rainure (20) propres à coopérer l'une avec l'autre.

4. Procédé selon la revendication 3, caractérisé en ce que le module (MFA) comporte une nervure (2) sur une paroi (12) dudit logement (1), sensiblement parallèle à une direction (X-X) d'introduction du réservoir (RES) dans le logement (1), tandis que le réservoir (RES) comporte une rainure (20) agencée pour recevoir ladite nervure (2).

5. Procédé selon l'une des revendications 3 et 4, caractérisé en ce que le logement (1) comporte une paroi de fond (22) sensiblement perpendiculaire à une direction (X-X) d'introduction du réservoir dans le logement, tandis que le réservoir (RES) comporte une protubérance (21) en regard de ladite paroi de fond (22), de sorte qu'au cours de l'étape b), la protubérance (21) vient au contact de la paroi de fond (22), laquelle forme butée.

6. Procédé selon la revendication 5, prise en combinaison avec la revendication 4, caractérisé en ce que la protubérance est réalisée sous la forme d'un bossage (21) le long d'une partie au moins de ladite rainure (20), tandis que la nervure présente, dans une vue en coupe transversale, une forme générale en C et est apte à recevoir ladite protubérance.

7. Procédé selon l'une des revendications précédentes, caractérisé en ce qu'il est prévu en outre des moyens de fixation par encliquetage (30,40,3,4A,4B) du réservoir dans le logement au cours de l'étape c).

8. Procédé selon la revendication 7, caractérisé en ce qu'une paroi (13) du logement (1) comporte un évidement (3) en U, propre à recevoir un pion (30) que porte une paroi du réservoir (RES), en regard de l'évidement (3).

9. Procédé selon la revendication 8, caractérisé en ce que la paroi (13) du logement, munie dudit évidement (3), porte deux pattes élastiques (4A,4B) propres à s'encliqueter dans une gorge (40) que comporte ledit pion (30).

10. Procédé selon la revendication 1, caractérisé en ce que le réservoir (RES) est fixé par surmoulage dans le module de face avant (MFA), au cours de l'étape c).

11. Module de face avant d'un véhicule automobile, pour la mise en oeuvre d'un procédé selon l'une des revendications précédentes, comportant des moyens de réception (1,2,22, 3,4A,4B) d'un réservoir de fluide (RES), notamment d'un équipement dudit véhicule.

12. Réservoir de fluide, notamment d'un équipement de véhicule automobile, pour la mise en oeuvre du procédé selon l'une des revendications 1 à 10, comportant des moyens de coopération (20,21,30,40) pour l'introduction et la fixation dudit réservoir (RES) dans un logement (1) d'un module de face avant (MFA) du véhicule.
